# EUROPÄISCHE PATENTSCHRIFT

(11) **EP 2 455 586 B1**
(45) Veröffentlichungstag und Bekanntmachung des Hinweises auf die Patenterteilung: **03.10.2012**
(21) Anmeldenummer: 10191460.4
(22) Anmeldetag: 17.11.2010
(51) Int. Cl.: F01D 5/22, F01D 11/00, F01D 5/08

(54) **Rotor für eine Strömungsmaschine mit Dichtungs- und Dämpfungselementen**
Rotor for a turbo engine comprising sealing and damping elements
Rotor pour une turbomachine comportant des éléments d'étanchéité et des amortissements

(43) Veröffentlichungstag der Anmeldung: 23.05.2012
(73) Patentinhaber: MTU Aero Engines GmbH, 80995 München (DE)
(72) Erfinder: Stiehler, Frank, 04924 Bad Liebenwerda (DE); Borufka, Peter, 82319 Starnberg (DE)

(56) Entgegenhaltungen:
- WO-A2-2009/008944
- WO-A2-2010/088882
- US-A- 5 281 097

## Beschreibung

Die Erfindung betrifft einen Rotor der im Oberbegriff des Patentanspruchs 1 angegebenen Art, eine Schaufel der im Oberbegriff des Patentanspruchs 12 angegebenen Art sowie eine Strömungsmaschine mit einem Rotor.

Bei Strömungsmaschinen wie beispielsweise Flugzeugturbinen, die in zahlreichen Varianten in Luftfahrzeugen, aber auch in verschiedenen Fahrzeugtypen und bei stationären Anwendungen eingesetzt werden, werden in der oder den Brennkammern immer höhere Temperaturen angestrebt, um einen verbesserten Wirkungsgrad zu erzielen. Im Hochdruckteil der Flugzeugturbine, der sich stromabwärts an die Brennkammer anschließt, sind daher alle offenen Oberflächen von Leit- und Laufschaufeln sowie von anderen offen liegenden Bauteilen Temperaturen ausgesetzt, die teilweise im Bereich des Schmelzpunktes der verwendeten Materialien liegen können. Um eine Flugzeugturbine bei einer möglichst hohen Temperatur betreiben zu können, werden daher die dem heißen Gasstrom ausgesetzten Bauteile, insbesondere die Schaufeln, mittels innen liegender Kühlkanäle sowie durch eine sogenannte Filmkühlung gekühlt.

Die EP 1 795 703 A2 offenbart einen beschaufelten Rotor, bei welchem jede Laufschaufel unterhalb ihrer jeweiligen Schaufelplattform eine Kühlkammer aufweist, in die während des Betriebs der zugeordneten Turbine Kühlluft geleitet wird. Jede Laufschaufel besitzt am Boden ihres Schaufelfußes eine oder mehrere Eintrittsöffnungen zum Zuführen von Kühlluft in Kühlkanäle, die innerhalb der Laufschaufel verlaufen und sich ausgehend vom Schaufelfuß bis in ein radial oberhalb der Schaufelplattform ausgebildetes Schaufelblatt erstrecken. Das Schaufelblatt besitzt seinerseits mehrere Austrittsöffnungen, durch welche die Kühlluft wieder aus der Laufschaufel austreten kann. Zum Zuführen von Kühlluft in die Kühlkammer umfasst der Schaufelhals der Laufschaufel einen weiteren Kanal, der sich innerhalb der Laufschaufel zwischen dem Kühlkanal und der Kühlkammer erstreckt. Die Kühlkammer ist an ihrem dem Schaufelhals der Laufschaufel abgewandten Ende mit Hilfe eines Dämpfungselements abgedichtet und weist eine oder mehrere Austrittsöff nungen in der Schaufelplattform auf, durch welche die Kühlluft austreten kann. Alternativ ist vorgesehen, dass die Kühlkammer fluidisch vom inneren Kühlkanal der Laufschaufel entkoppelt ist und durch Eintrittsöffnungen im Dämpfungselement mit Kühlluft versorgt wird.

Die US 2005/0232780 A1 beschreibt beispielsweise einen integral beschaufelten Rotor für eine Turbine, bei dem Eintrittsöffnungen innerer Kühlkanäle jeweils am Schaufelhals einer Laufschaufel angeordnet sind. Zwischen Schaufelhals und Schaufelblatt umfassen die Laufschaufeln Schaufelplattformen, welche in umfänglicher Richtung miteinander verschweißt sein können. WO 2010/088882 beschreibt ein weiteres Bespiel für einen gekühlten integral beschaufeten Rotor einer Turbine.

Als nachteilig an dem bekannten Rotor ist jedoch der Umstand anzusehen, dass keine optimale Kühlluftversorgung der Laufschaufeln ermöglicht ist, da die Geometrien der Eintrittsöffnungen starken konstruktiven Restriktionen aufgrund der erforderlichen Schaufelfußgeometrien sowie starken aerodynamischen Restriktionen aufgrund der notwendigen Gestaltung der strömungsführenden Flächen im Bereich der Schaufelhälse unterliegt.

Aufgabe der Erfindung ist es, eine verbesserte Kühlluftversorgung von Laufschaufeln eines Rotors einer Strömungsmaschine zu ermöglichen.

Die Aufgabe wird erfindungsgemäß durch einen Rotor mit den Merkmalen des Patentanspruchs 1, eine Schaufel mit den Merkmalen des Patentanspruchs 12 sowie durch eine Strömungsmaschine gemäß Patentanspruch 13 gelöst. Vorteilhafte Ausgestaltungen der Erfindung sind in den jeweiligen Unteransprüchen angegeben, wobei vorteilhafte Ausgestaltungen des Rotors als vorteilhafte Ausgestaltungen der Strömungsmaschine und umgekehrt anzusehen sind.

Bei einem erfindungsgemäßen Rotor, welcher eine verbesserte Kühlluftversorgung seiner Laufschaufeln ermöglicht, ist es vorgesehen, dass die Eintrittsöffnung in einer radial unterhalb der Schaufelplattform ausgebildeten Kavität angeordnet ist. Die Kühlluftzuführung zum Kühlkanal der Laufschaufel erfolgt mit anderen Worten bezüglich einer Drehachse des Rotors radial oberhalb des Schaufelhalses und radial unterhalb der Schaufelplattform. Hierdurch kann für die Eintrittsöffnung sowie für die berandeten Schaufelbereiche jeweils eine optimale Geometrie gewählt werden, da der Bereich zwischen dem Schaufelhals und der Schaufelplattform nur vergleichsweise geringen konstruktiven Restriktionen unterliegt. Des Weiteren wird hierdurch eine mechanische Schwächung des Schaufelfußes, über welchen die Laufschaufel mit dem Rotorgrundkörper verbunden ist, vermieden. Mit Hilfe der Kavität ist dabei eine besonders effektive Kühlluftzuführung in den Kühlkanal der Laufschaufel ermöglicht, da die Kavität als "Reservoir" für Kühlluft fungieren kann. Die Kühlgrenze kann dabei im Vergleich zu herkömmlichen Rotoren radial sehr weit außen und somit nah an den Gas- bzw. Strömungskanal gelegt werden. Trotzdem ist eine Abgrenzung gegenüber dem Gaskanal der Strömungsmaschine stets sichergestellt, so dass ein Eintreten von Heißgas in den inneren Kühlkanal der Laufschaufel zuverlässig verhindert wird. Der Rotor erfüllt daher die Anforderungen an seine Robustheit (Robustness-Requirement). Darüber hinaus ist auf diese Weise eine Kühlluftzuführung in den Kühlkanal bei minimaler struktureller Schädigung der Laufschaufel ermöglicht, da die Kühlluftzuführung ohne Schwächung des Schaufelfußes bzw. des Anbindungsbereichs der Laufschaufel an eine Rotorscheibe, einen Rotorring oder dergleichen erfolgen kann. Dabei ist es unerheblich, ob der Rotor montiert oder in Integralbauweise ausgeführt ist. Des Weiteren ermöglicht die erfindungsgemäße Anordnung der Eintrittsöff nung in der Kavität eine verbesserte Einstellung des Temperaturgradienten sowohl im Rotorgrundkörper als auch im Bereich der Rotorgrundkörper-Laufschaufel-Verbindung. Mit Hilfe der Kavität kann zudem die bewegte Masse des Rotors vorteilhaft verringert werden. Es kann grundsätzlich vorgesehen sein, dass mehrere oder alle Laufschaufeln des Rotors erfindungsgemäß ausgebildet sind.

In einer weiteren Ausgestaltung ist vorgesehen, dass die Laufschaufeln lösbar oder stoffschlüssig mit dem Rotorgrundkörper verbunden sind. Hierdurch wird eine hohe konstruktive Freiheit erreicht, da der Rotor wahlweise in montierter Bauweise und/oder integraler BLISK-(Bladed Disk) bzw. BLING-(Bladed Ring) Bauweise ausgeführt sein kann.

In einer weiteren vorteilhaften Ausgestaltung der Erfindung ist vorgesehen, dass die Schaufelplattform wenigstens einer Laufschaufel ein radial inneres Schaufeldeckband zum zumindest teilweisen Begrenzen eines Strömungskanals der Strömungsmaschine bildet. Mit anderen Worten ist vorgesehen, dass die Schaufelplattform die radial innere Begrenzung für die heißen Verbrennungsgase der Turbinenstufe definiert.

In einer weiteren vorteilhaften Ausgestaltung der Erfindung ist vorgesehen, dass zwischen zwei benachbarten Laufschaufeln ein Dichtungselement angeordnet ist, mittels welchem ein Austausch von Strömungsmedium in radialer Richtung zwischen den Laufschaufeln hindurch zumindest reduzierbar ist. Dies ermöglicht die Verminderung von Leckagen, wodurch beispielsweise der Wirkungsgrad einer dem Rotor zugeordneten Strömungsmaschine vorteilhaft gesteigert wird. Es kann vorgesehen sein, dass das Dichtungselement im Querschnitt spiegelsymmetrisch ausgebildet ist, um eine besonders gleichmäßige Anlage an korrespondierenden Anlageflächen benachbarter Lauf schaufeln zu ermöglichen.

Weitere Vorteile ergeben sich, indem zwischen zwei benachbarten Laufschaufeln ein Dämpfungselement zum Dämpfen von Schaufelschwingungen angeordnet ist. Hierbei wird das Dämpfungselement vorzugsweise in einer Position angeordnet, in der bei Schwingvorgängen ausreichende Verschiebungen der schwingenden Strukturen auftreten. Mit Hilfe der erfindungsgemäßen Kavität steht dem Dämpfungselement ein vergrößerter Bauraum zur Verfügung, so dass Geometrie und Masse des Dämpfungselements entsprechend flexibler variiert werden können. Entsprechendes gilt gegebenenfalls für das vorstehend erwähnte Dichtungselement. Durch das Anordnen des Dämpfungselements zwischen den Schaufelplattformen kann aufgrund der Relativverschiebungen zwischen dem Dämpfungselement und den benachbarten Laufschaufeln bzw. Schaufelplattformen sehr viel Energie auch bei kritischen Resonanzdurchgängen, beispielsweise aufgrund von Biege-und Torsionsschwingungen, dissipiert werden, wodurch der Rotor dämpfungsmechanisch besonders robust ist. Weiterhin kann das Dämpfungselement auf diese Weise besonders einfach, kostengünstig und bauraumsparend im Rotor integriert werden. Der zur Verfügung stehende konstruktive Gestaltungsraum kann dabei optimal ausgenutzt werden, so dass die Gestaltung und Größe des Dämpfungselements derart gewählt werden können, dass die Auslegungs- und Umsetzungsanforderungen vollständig erfüllt werden. Dabei dient die Masse des Dämpfungselements als Optimierungsparameter und zur Definition von Schaltpunkten zwischen einem sogenannten "locked und slipping", das heißt zwischen einem relativ zur Laufschaufel ortsfesten und einem relativ zur Laufschaufel beweglichen Zustand des Dämpfungselements. Das Dämpfungselement kann darüber hinaus sehr einfach montiert und demontiert werden, wodurch entsprechende Kostenvorteile bei Herstellung, Reparatur oder Überholung des Rotors erzielt werden. Es ist weiterhin denkbar, dass das Dämpfungselement mehrteilig ausgebildet ist und zur Montage von der Hochdruck- und der Niederdruckseite der Laufschaufel her in die gewünschte Montagestellung bewegt wird. Weiterhin kann grundsätzlich vorgesehen sein, dass zwischen mehreren und/oder allen Schaufelplattformen des Rotors ein und/oder mehrere Dämpfungselemente angeordnet sind, wodurch eine besonders flexible Anpassbarkeit an unterschiedliche Anforderungsprofile und Ausgestaltungsformen des Rotors gegeben ist.

Weitere Vorteile ergeben sich, wenn im radial äußeren Bereich wenigstens einer Schaufelplattform eine innenliegende Anlagefläche vorgesehen ist, mit welcher das Dichtungselement und/oder das Dämpfungselement zumindest beim Betrieb des Rotors in Anlage bringbar ist. Da das Dämpfungselement bzw. das Dichtungselement während der Rotation des Rotors aufgrund des Fliehkraftfeldes radial nach oben bewegt wird bzw. werden, wird hierdurch auf konstruktiv besonders einfache Weise sichergestellt, dass sich das Dämpfungs- bzw. das Dichtungselement zuverlässig an die Anlagefläche anlegt. Hierdurch wird die Dämpfungs- und/oder Dichtwirkung zusätzlich verbessert. Dabei kann durch eine geometrische Anpassung der Kontaktgeometrie zwischen dem Dämpfungs- bzw. Dichtungselement und der Anlagefläche die Dämpfungs- bzw. Dichtwirkung zusätzlich gesteigert werden.

In einer weiteren vorteilhaften Ausgestaltung der Erfindung ist vorgesehen, dass das Dichtelement und/oder das Dämpfungselement entlang seiner axialen Erstreckung radial nach oben gewölbt ist. Da das Dämpfungselement bzw. das Dichtungselement während der Rotation des Rotors auf grund des Fliehkraftfeldes radial nach oben bewegt wird, wird durch die gewölbte bzw. gebogene Ausgestaltung eine stabile symmetrische Selbstausrichtung des Dämpfungs- und/oder Dichtungselements sowie eine zuverlässige Anlage an den zugeordneten Laufschaufeln erreicht. Im Unterschied zum Stand der Technik kann zudem möglichst viel Masse des Dichtungs- und/oder Dämpfungselements möglichst weit nach radial oben verlagert werden.

Weitere Vorteile ergeben sich, indem die Kavität auf einer Druckseite und/oder auf einer Saugseite der Laufschaufel ausgebildet ist. Hierdurch kann der Kühlluftstrom gezielt beeinflusst und eingestellt werden.

In einer weiteren vorteilhaften Ausgestaltung der Erfindung ist vorgesehen, dass der Schaufelhals wenigstens einer Laufschaufel einen sich zwischen einer Niederdruckseite und einer Hochdruckseite des Rotors erstreckenden Entlastungskanal umfasst. Mit Hilfe eines derartigen Entlastungskanals können etwaige Spannungen abgebaut und das Gewicht des Rotors optimiert werden.

Dabei hat es sich weiterhin als vorteilhaft gezeigt, wenn der Entlastungskanal fluidisch mit der Kavität verbunden ist. Mit anderen Worten ist vorgesehen, dass der Kühlluftstrom durch den Entlastungskanal in die Kavität und von dort aus durch die Eintrittsöffnung in den innerhalb des Schaufelblatts ausgebildeten Kühlkanal strömen kann. Dies gestattet eine besonders vorteilhafte Kühlluftstromführung und eine entsprechend zuverlässige Kühlung der Laufschaufel.

Eine zusätzliche Verbesserung der Kühlluftzuführung ist in weiterer Ausgestaltung der Erfindung dadurch ermöglicht, dass wenigstens eine Laufschaufel mindestens zwei und vorzugsweise drei Eintrittsöffnungen und/oder mindestens zwei innere Kühlkanäle umfasst.

Ein weiterer Aspekt der Erfindung betrifft eine Schaufel, insbesondere eine Laufschaufel für einen Rotor einer Strömungsmaschine, welche zumindest einen inneren Kühlkanal aufweist, der sich zumindest entlang eines überwiegenden Bereichs eines Schaufelblatts der Schaufel erstreckt und eine zwischen einem Schaufelfuß und einer Schaufelplattform der Schaufel ausgebildete Eintrittsöffnung zum Zuführen von Kühlluft in das Schaufelblatt aufweist. Dabei ist eine verbesserte Kühlluftversorgung der Schaufel erfindungsgemäß dadurch ermöglicht, dass die Eintrittsöffnung in einer radial unterhalb der Schaufelplattform ausgebildeten Kavität angeordnet ist. Die sich hieraus ergebenden Vorteile sind den vorhergehenden Beschreibungen zu entnehmen.

Ein weiterer Aspekt der Erfindung betrifft eine Strömungsmaschine mit einem Rotor und/oder einer Schaufel nach einem der vorhergehenden Ausführungsbeispiele. Die sich hieraus ergebenden Vorteile sind den vorhergehenden Beschreibungen zu entnehmen. Die Strömungsmaschine ist in weiterer bevorzugter Ausgestaltung als Flugzeugturbine ausgebildet.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische Perspektivansicht einer Laufschaufel von der Niederdruckseite eines Rotors aus gesehen;
- Fig. 2: eine schematische Perspektivansicht der in Fig. 1 gezeigten Laufschaufel von der Hochdruckseite des Rotors aus gesehen; und
- Fig. 3: eine schematische seitliche Schnittansicht eines Rotors, wobei ein Kühlluftstrom in Eintrittsöffnungen eines Kühlkanals einer Laufschaufel des Rotors verdeutlicht ist.

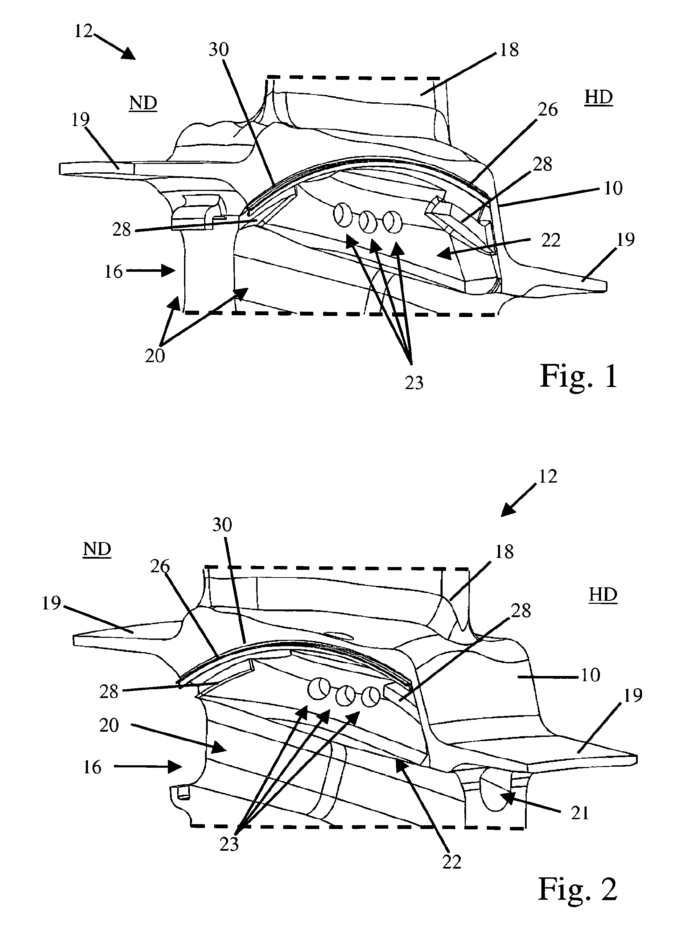

Fig. 1 zeigt eine schematische Perspektivansicht einer Laufschaufel 12 von der Niederdruckseite ND eines Rotors (nicht gezeigt) aus gesehen. Fig. 1 wird im Folgenden in Zusammenschau mit Fig. 2 erläutert werden, in welcher eine schematische Perspektivansicht der in Fig. 1 gezeigten Laufschaufel 12 von der Hochdruckseite HD des Rotors aus gesehen dargestellt ist.

Der Rotor, der vorliegend in integraler BLISK-(Bladed Disk) Bauweise für eine Turbinenstufe eines Flugzeugtriebwerks ausgebildet ist, umfasst einen Rotorgrundkörper 14 (s. Fig. 4), der in an sich bekannter Weise stoffschlüssig mit mehreren Laufschaufeln 12 verbunden ist. Von der abgebildeten Laufschaufel 12 ist in Fig. 1 ein bezüglich einer Drehachse des Rotors radial innerer Bereich eines sich an die Schaufelplattform 10 anschließenden Schaufelblatts 18 erkennbar. Die Schaufelplattform 10 bildet zusammen mit auf der Niederdruckseite ND und der Hochdruckseite HD des Rotors ausgebildeten Fortsätzen ein Schaufeldeckband 19 zum zumindest teilweisen Ab-und Begrenzen eines Strömungskanals des Flugzeugtriebwerks. Die Schaufelplattform 10 definiert mit anderen Worten die radial innere Begrenzung für die heißen Verbrennungsgase der Turbinenstufe.

Um hohe thermische Spannungen im Rotorgrundkörper 14 zu vermeiden, weist ein Schaufelhals 16 der Laufschaufel 12 zu beiden Seiten in axialer Richtung zwischen der Nieder- und der Hochdruckseite ND, HD des Rotors verlaufende Entlastungskanäle oder -schlitze 20 auf. Die Entlastungskanäle 20 definieren formal den radial äußeren, nicht unterbrochenen Rand des soliden Rotorgrundkörpers 14. Des Weiteren umfasst die Laufschaufel 12 einen schaufelhalsseitigen Kanal 21. Radial oberhalb der Vertiefungen 20 weist jede Laufschaufel 12 zu beiden Seiten Kavitäten 22 auf, die radial unterhalb der Schaufelplattform 10 und radial oberhalb des Schaufelhalses 16 ausgebildet ist. Alternativ kann vorgesehen sein, dass die Kavität 22 nur auf der Druck- oder nur auf der Saugseite der jeweiligen Laufschaufel 12 ausgebildet ist.

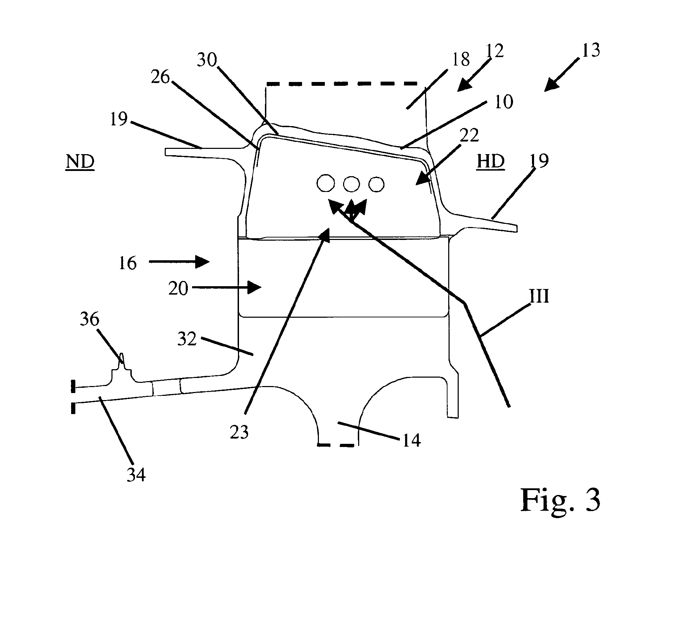

In der Wand jeder Kavität 22 sind im vorliegenden Ausführungsbeispiel drei Eintrittsöffnungen 23 ausgebildet. Kühlluft kann somit zum Kühlen des Schaufelblatts 18 durch den schaufelhalsseitigen Entlastungskanal 20 in die Kavität 22 unterhalb der Schaufelplattform 10 und von hier aus durch die Eintrittsöffnungen 23 in einen oder mehrere innere Kühlkanäle (nicht gezeigt) der Laufschaufel 12 eintreten (vgl. Fig. 3).

Die Kühlluftzuführung zur Laufschaufel 12 erfolgt mit anderen Worten über die Eintrittsöffnungen 23, die in der Wand der radial unterhalb der Schaufelplattform 10 ausgebildeten Kavität 22 ausgebildet sind. Es kann somit eine optimale Geometrie für die Einlassquerschnitte der Eintrittsöffnungen 23 und für die berandeten Materialbereiche gewählt werden, da dieser Bereich der Laufschaufel 12 im Unterschied zum Schaufelfuß 32 (s. Fig. 3), dem Schaufelhals 16 oder dem Schaufelblatt 18 kaum einer konstruktiven oder aerodynamischen Restriktion unterliegt.

Um einen unerwünschten Gasaustausch und insbesondere einen Kühlluftverlust in radialer Richtung zwischen benachbarten Laufschaufeln 12 hindurch zumindest weitgehend zu unterbinden, ist der Schaufelplattform 10 im vorliegenden Ausführungsbeispiel ein grundsätzlich optionales und vorliegend im Querschnitt T-förmig ausgebildetes Dichtungselement 26 zugeordnet. Es ist jedoch zu betonen, dass das Dichtungselement 26 grundsätzlich auch abweichende Querschnittsgeometrien aufweisen kann. Alternativ oder zusätzlich zum gezeigten Dichtungselement 26 kann innerhalb der Kavität 22 bzw. zwischen benachbarten Schaufelplattformen 10 zweier Laufschaufeln 12 jeweils ein Dämpfungselement (nicht gezeigt) zum Dämpfen von Schaufelschwingungen angeordnet werden. Das Dämpfungselement kann beispielsweise radial unterhalb des Dichtungselements 26 angeordnet und mit diesem verbunden sein. Hierzu kann das Dichtungselement 26 beispielsweise in eine korrespondierende Nut des Dämpfungselements eingesteckt werden. Das Dämpfungselement kann grundsätzlich auch zum verbesserten Abdichten des Spalts ausgebildet sein bzw. verwendet werden.

Die Schaufelplattform 10 umfasst im Bereich der Nieder- und der Hochdruckseite ND, HD jeweils ein Führungselement 28. An der Innenwand der Schaufelplattform 10 ist eine Anlagefläche 30 vorgesehen, mit welcher das Dichtungselement 26 und/oder gegebenenfalls das Dämpfungselement zumindest beim Betrieb des Rotors in Anlage gebracht wird. Die Führungselemente 28 und die Anlagefläche 30 sind jeweils radial nach oben gewölbt bzw. gebogen, wodurch auch das Dichtungselement 26 und/oder gegebenenfalls das Dämpfungselement im montierten Zustand radial nach oben gewölbt ist bzw. sind. Hierdurch liegt es aufgrund der während des Betriebs des Rotors auftretenden Fliehkräfte zuverlässig an der Anlagefläche 30 an, wodurch neben einer stabilen symmetrischen Selbstausrichtung auch eine besonders hohe Dichtungs- bzw. Dämpfungswirkungen erreicht wird. Weiterhin vereinfachen die gewölbten Führungselemente 28 und die gewölbte Anlagefläche 30 sowohl die Montage als auch die Demontage des Dichtungselements 26 bzw. des Dämpfungselements, beispielsweise zum Reparieren und/oder Überholen des Rotors 13. Des Weiteren kann durch die Wölbung möglichst viel Masse möglichst weit radial oben angeordnet werden. Vorzugsweise wird das Dichtungselement 26 bzw. das Dämpfungselement von der Niederdruckseite ND aus in die Kavität 22 der Schaufelplattform 10 bewegt, wobei die Führungselemente 28 und die gewölbte Anlagefläche 30 als Führungs- und Gleitflächen fungieren. Das Dichtungselement 26 und/oder das Dämpfungselement können alternativ auch mehrteilig ausgebildet sein und von beiden Druckseiten HD, ND aus montiert bzw. demontiert werden. Im vorliegenden Ausführungsbeispiel ist die Schaufelplattform 10 auf ihrer der Hochdruckseite HD zugewandten Seite derart ausgebildet, dass das Dichtungselement 26 bzw. das Dämpfungselement beim Erreichen der Montageposition anschlägt.

Fig. 3 zeigt eine schematische seitliche Schnittansicht eines Rotors 13. Der Aufbau der Laufschaufel 12 entspricht im Wesentlichen demjenigen des vorhergehenden Ausführungsbeispiels. Die in Fig. 3 gezeigte Laufschaufel 12 weist jedoch im Unterschied zum vorherigen Ausführungsbeispiel keine Führungselemente 28 auf. Wie in Fig. 3 erkennbar ist, ist die Laufschaufel 12 über ihren Schaufelfuß 32 mit dem Rotorgrundkörper 14 verbunden. Der Rotor 13 umfasst weiterhin eine an sich bekannte Trommel 34 mit einem Dichtelement 36.

Mit den Pfeilen III ist schematisch ein Kühlluftstrom in die Eintrittsöffnungen 23 eines innenliegenden Kühlkanals (nicht gezeigt) der Laufschaufel 12 des Rotors 13 verdeutlicht. Dabei ist erkennbar, dass die Kühlluft von der Hochdruckseite HD aus über den schaufelhalsseitigen Entlastungskanal 20 in die Kavität 22 unterhalb der Schaufelplattform 10 und von hier aus durch die Eintrittsöffnungen 23 in den oder die Kühlkanäle strömt. Auch in diesem Ausführungsbeispiel wird die Kavität 22 radial nach oben durch ein an der Anlagefläche 30 anliegendes Dichtungselement 26 abgedichtet.

## Patentansprüche

1. Rotor (13) für eine Strömungsmaschine mit Laufschaufeln (12), die mit einem Rotorgrundkörper (14) verbunden sind, wobei wenigstens eine Laufschaufel (12) zumindest einen inneren Kühlkanal aufweist, welcher sich zumindest entlang eines Bereichs eines Schaufelblatts (18) der Laufschaufel (12) erstreckt und eine Eintrittsöffnung (23) zum Zuführen von Kühlluft in das Schaufelblatt (18) aufweist, wobei die Eintrittsöffnung (23) in einem zwischen einem Schaufelfuß (32) und einer Schaufelplattform (10) der Laufschaufel (12) liegenden Schaufelhals (16) ausgebildet ist, wobei die Eintrittsöffnung (23) in einer radial unterhalb der Schaufelplattform (10) ausgebildeten Kavität (22) angeordnet ist, **dadurch gekennzeichnet, dass** der Schaufelhals (16) wenigstens einer Laufschaufel (12) einen sich zwischen einer Niederdruckseite (ND) und einer Hochdruckseite (HD) des Rotors (13) erstreckenden Entlastungskanal (20) umfasst und der Entlastungskanal (20) fluidisch mit der Kavität (22) verbunden ist.

2. Rotor (13) nach Anspruch 1, **dadurch gekennzeichnet, dass** die Laufschaufeln (12) lösbar oder stoffschlüssig mit dem Rotorgrundkörper (14) verbunden sind.

3. Rotor (13) nach Anspruch 1 oder 2, **dadurch gekennzeichnet, dass** die Schaufelplättform (10) wenigstens einer Laufschaufel (12) ein radial inneres Schaufeldeckband (19) zum zumindest teilweisen Begrenzen eines Strömungskanals der Strömungsmaschine bildet.

4. Rotor (13) nach einem der Ansprüche 1 bis 3, **dadurch gekennzeichnet, dass** zwischen zwei benachbarten Laufschaufeln (12) ein Dichtungselement (26) angeordnet ist, mittels welchem ein Austausch von Strömungsmedium in radialer Richtung zwischen den Laufschaufeln (12) hindurch zumindest reduzierbar ist.

5. Rotor (13) nach einem der Ansprüche 1 bis 4, **dadurch gekennzeichnet, dass** zwischen zwei benachbarten Laufschaufeln (12) ein Dämpfungselement zum Dämpfen von Schaufelschwingungen angeordnet ist.

6. Rotor (13) nach Anspruch 4 oder 5, **dadurch gekennzeichnet, dass** im radial äußeren Bereich wenigstens einer Schaufelplattform (10) eine innenliegende Anlagefläche (30) vorgesehen ist, mit welcher das Dichtungselement (26) und/oder das Dämpfungselement zumindest beim Betrieb des Rotors (13) in Anlage bringbar ist.

7. Rotor (13) nach einem der Ansprüche 4 bis 6, **dadurch gekennzeichnet, dass** das Dichtungselement (26) und/oder das Dämpfungselement entlang seiner axialen Erstreckung radial nach oben gewölbt ist.

8. Rotor (13) nach einem der Ansprüche 1 bis 7, **dadurch gekennzeichnet, dass** die Kavität (22) auf einer Druckseite und/oder auf einer Saugseite der Laufschaufel (12) ausgebildet ist.

9. Rotor (13) nach einem der Ansprüche 1 bis 8, **dadurch gekennzeichnet, dass** wenigstens eine Laufschaufel (12) mindestens zwei und vorzugsweise drei Eintrittsöffnungen (23) und/oder mindestens zwei innere Kühlkanäle umfasst.

10. Strömungsmaschine mit einem Rotor (13) nach einem der Ansprüche 1 bis 9.

## Claims

1. A rotor (13) for a turbo-engine having rotor blades (12) that are connected to a rotor base body (14), wherein at least one rotor blade (12) has at least one inner cooling channel which extends at least along a region of a blade leaf (18) of the rotor blade (12) and has an inlet opening (23) for the supply of cooling air into the blade leaf (18), wherein the inlet opening (23) is formed in a blade neck (16) lying between a blade root (32) and a blade platform (10) of the rotor blade (12), wherein the inlet opening (23) is arranged in a cavity (22) that is formed radially underneath the blade platform (10), **characterised in that** the blade neck (16) of at least one rotor blade (12) comprises a relief channel (20) extending between a low-pressure side (ND) and a high-pressure side (HD) of the rotor (13), and the relief channel (20) is fluidically connected to the cavity (22).

2. A rotor (13) according to claim 1, **characterised in that** the rotor blades (12) are connected to the rotor base body (14) in a detachable or firmly bonded manner.

3. A rotor (13) according to claim 1 or 2, **characterised in that** the blade platform (10) of at least one rotor blade (12) forms a radially inner blade cover band (19) for at least partly delimiting a flow channel of the turbo-engine.

4. A rotor (13) according to one of claims 1 to 3, **characterised in that** arranged between two adjacent rotor blades (12) there is a sealing element (26) by means of which exchange of flow medium in the radial direction through between the rotor blades (12) is at least reducible.

5. A rotor (13) according to one of claims 1 to 4, **characterised in that** a damping element for damping blade vibrations is arranged between two adjacent rotor blades (12).

6. A rotor (13) according to claim 4 or 5, **characterised in that** provided in the radially outer region of at least one blade platform (10) there is an internal contact surface (30) with which the sealing element (26) and/or the damping element can be brought into contact at least during operation of the rotor (13).

7. A rotor (13) according to one of claims 4 to 6, **characterised in that** the sealing element (26) and/or the damping element is radially upwardly arched along its axial extent.

8. A rotor (13) according to one of claims 1 to 7, **characterised in that** the cavity (22) is formed on a pressure side and/or on a suction side of the rotor blade (12).

9. A rotor (13) according to one of claims 1 to 8, **characterised in that** at least one rotor blade (12) comprises at least two and preferably three inlet openings (23) and/or at least two inner cooling channels.

10. A turbo-engine having a rotor (13) according to one of claims 1 to 9.

## Revendications

1. Rotor (13) pour une turbomachine doté d'aubes (12), qui sont reliées à un corps de base de rotor (14), au moins une aube (12) présentant au moins un canal de refroidissement intérieur, lequel s'étend au moins le long d'une zone d'une pale (18) de l'aube (12) et qui présente un orifice d'entrée (23) servant à amener de l'air de refroidissement dans la pale (18), l'orifice d'entrée (23) étant réalisé dans un col d'aube (16) se trouvant entre un pied d'aube (32) et une plate-forme d'aube (10) de l'aube (12), l'orifice d'entrée (23) étant disposé dans une cavité (22) réalisée de manière radiale sous la plate-forme d'aube (10), **caractérisé en ce que** le col d'aube (16) d'au moins une aube (12) comporte un canal de décharge (20) s'étendant entre un côté basse pression (ND) et un côté haute pression (HD) du rotor (13), et **en ce que** le canal de décharge (20) est relié de manière fluidique à la cavité (22).

2. Rotor (13) selon la revendication 1, **caractérisé en ce que** les aubes (12) sont reliées de manière amovible ou par liaison de matière au corps de base du rotor (14).

3. Rotor (13) selon la revendication 1 ou 2, **caractérisé en ce que** la plate-forme d'aube (10) d'au moins une aube (12) forme une bande de couverture d'aube (19) radialement intérieure servant au moins en partie à délimiter un canal d'écoulement de la turbomachine.

4. Rotor (13) selon l'une quelconque des revendications 1 à 3, **caractérisé en ce qu'**un élément d'étanchéité (26) est disposé entre deux aubes (12) adjacentes, au moyen duquel un échange de milieu d'écoulement passant dans la direction radiale entre les aubes (12) peut être au moins réduit.

5. Rotor (13) selon l'une quelconque des revendications 1 à 4, **caractérisé en ce qu'**un élément d'amortissement servant à amortir les vibrations des aubes est disposé entre deux aubes (12) adjacentes.

6. Rotor (13) selon la revendication 4 ou 5, **caractérisé en ce qu'**une surface d'appui (30) se trouvant à l'intérieur est prévue dans la zone radialement extérieure d'au moins une plate-forme d'aube (10), laquelle permet d'amener l'élément d'étanchéité (26) et/ou l'élément d'amortissement en appui au moins lors du fonctionnement du rotor (13).

7. Rotor (13) selon l'une quelconque des revendications 4 à 6, **caractérisé en ce que** l'élément d'étanchéité (26) et/ou l'élément d'amortissement sont courbés radialement vers le haut le long de leur extension radiale.

8. Rotor (13) selon l'une quelconque des revendications 1 à 7, **caractérisé en ce que** la cavité (22) est réalisée sur un côté de compression et/ou sur un côté d'aspiration de l'aube (12).

9. Rotor (13) selon l'une quelconque des revendications 1 à 8, **caractérisé en ce qu'**au moins une aube (12) comporte au moins deux et de préférence trois orifices d'entrée (23) et/ou au moins deux canaux de refroidissement intérieurs.

10. Turbomachine comportant un rotor (13) selon l'une quelconque des revendications 1 à 9.
